# EUROPEAN PATENT SPECIFICATION

(11) **EP 1 372 938 B1**
(45) Date of publication and mention of the grant of the patent: **14.03.2007**
(21) Application number: 02716956.4
(22) Date of filing: 22.03.2002
(51) Int. Cl.: B29C 63/18, B29C 33/68, B29C 39/08

(54) **METHOD FOR PRODUCING ROLLER MEANS FOR DECORATING OBJECTS**
VERFAHREN ZUR HERSTELLUNG VON WALZEN ZUM DEKORIEREN VON OBJEKTEN
PROCÉDÉ POUR FABRIQUER DES ROULEAUX DESTINÉS A DÉCORER DES OBJETS

(30) Priority: 22.03.2001 IT MO20010054
(43) Date of publication of application: 02.01.2004
(73) Proprietor: Nuova Astra SRL, 41043 Formigine MO (IT)
(72) Inventor: SIGHINOLFI, Sergio, I-41100 Modena (IT); BIOLCHINI, Mauro, Italo, I-41042 Fiorano Modenese (IT)
(74) Representative: Crugnola, Pietro
(86) International application number: PCT/IB2002/000857
(87) International publication number: WO 2002/076710

(56) References cited:
- EP-A1- 0 906 833
- WO-A1-02/07960
- CA-A1- 2 137 397
- GB-A- 809 267
- GB-A- 1 458 630
- US-A- 3 005 741
- US-A- 5 536 198
- US-A- 5 983 799

## Description

This invention concerns a method for producing roller means that can, for example, be used to decorate objects such as ceramic tiles, textiles, films, foils and material in the form of sheets or ribbons in general. The ceramics industry has for some time used rollers coated with soft material such as silicone, the flexible external layer of which can adapt to the surface irregularities of ceramic tiles and decorate them by transferring on such tiles an ornamental pattern without breaking them.

IT 1268912 discloses a method for manufacturing rollers coated with layers of elastic silicone material. According to such method, a cylindrical frame is positioned on a suitable machine, the cylindrical frame being provided with an external surface that is bored and designed to constitute the central structure supporting the rollers. The method further provides that a fluid/semi-fluid elastic silicone material is introduced inside such frame, which rotates around its own longitudinal axis. Due to the centrifugal force, during high-speed rotation this material passes through the holes obtained in the metal frame, so as to form a coating on said frame. The coating is subsequently solidified by a heat-induced hardening/polymerisation phase.

One disadvantage of the disclosed method is that the heating phase greatly complicates the machine, inasmuch as heating devices are required to heat the coating layer to a high temperature and control devices are required to ensure that heating takes place in the required manner.

In addition, the disclosed method consumes a great amount of energy because a not insignificant amount of energy is required to heat the coating layer.

Lastly, this method is not without risks for the operator, who may accidentally come into contact with machine parts that have been heated to a high temperature and he may thus become burnt.

A further disadvantage of the method disclosed in IT 1268912 consists in the fact that the phases of introduction of the elastic silicone material, distribution of said material outside the frame and solidification of the coating layer must take place in rotation. The machine must therefore be able to rotate the cylindrical frame, the mould and a plurality of devices suitable for closing the mould, and said machine must be of suitable dimensions to overcome the inertia of all these apparatuses at different rotation speeds, including very high rotation speeds. US 5983799 discloses a replaceable sleeve including an inner polymeric layer, a reinforcing layer overlying the inner layer, an intermediate polymeric layer overlying the reinforcing layer, and an outer polymeric layer. The sleeve may optionally include a cushion layer between the outer layer and the intermediate layer. Any suitable rubber adhesives may be used to bond the layers together during vulcanization.

EP 0671253 discloses a supporting structure coverable with multiple concentric layers of elastic silicone-based material to produce rollers having a mirror-finished flexible outer surface. The supporting structure has a hollow cylindrical body and a surface that is affected by multiple openings which are variously distributed and sized to allow the passage, produced by centrifugal force, of the material in the fluid/semifluid state from the inside towards the outer surface and to provide subsequent engagement.

One aim of this invention is to improve and simplify the methods and apparatuses for producing roller means.

A further aim of this invention is to provide methods and apparatuses for manufacturing roller means that consume little energy.

Yet another aim of this invention is to improve the safety of the methods and apparatuses for manufacturing roller means,

According to the invention, a method for producing roller means is provided, the method having the features claimed in claim 1.

In an advantageous version, the fitting step comprises applying on the tubular means gluing means through spraying means, suitable for uniformly distributing an adequate quantity of said gluing means.

In a further advantageous version, the fitting step further comprises turning inside out at least one first portion of the tubular means on at least a second portion of said tubular means, so as to make accessible a first initially internal region of said tubular means, applying said gluing means on said first initially internal region, and repositioning said at least one first portion in contact with the base structure.

In yet another further advantageous version, the fitting step further comprises turning inside out said at least one second portion of the tubular means on said at least one first portion of such tubular means, so as to make accessible a second initially internal region of the tubular means, applying the gluing means on said second initially internal region, and repositioning said at least one second portion in contact with the base structure.

In yet another further advantageous version, the method according to the invention further comprises rotating the roller means at a relatively low speed to allow a uniform distribution of the gluing means between the base structure and the.tubular means arranged outside said base structure.

Owing to this aspect of the invention, a significantly simplified method for producing roller means is defined, since such method comprises operations that are conducted at ambient temperature. The risks for the operator and the high energy consumption due to high temperature are thus totally eliminated.

Moreover, it is not necessary to rotate moulds or devices connected thereto, because only the roller means need to be rotated; the rotating masses thus have greatly reduced inertia and the equipment can be dimensioned less critically, also because rotation occurs at low speeds. In an advantageous version, the method further comprises preparing said base structure by shaping a rigid lamina according to a cylindrical geometry, to obtain the substantially rigid inner core.

Advantageously, said preparing further comprises applying, on said substantially rigid inner more, elastically deformable flexible means, comprising sponge means, initially in the form of a sheet.

Thus, the complications arising from centrifugal casting of the flexible means are avoided.

The invention can be better understood and carried out with reference the enclosed drawings, which illustrate some exemplifying and not restrictive embodiment forms thereof, wherein:
Figure 1 is a schematic section of roller means that can be obtained by a method according to the invention;
Figure 2 is a schematic section showing a first phase of said method;
Figure 3 is a schematic section showing a subsequent phase of said method;
Figure 4 is a schematic section showing a further subsequent phase of said method;
Figure : 5 is a schematic section showing an even further subsequent phase of said method;
Figure 6 is a partially sectioned front view of an apparatus for producing tubular means in a closed configuration;
Figure 7 is a partially sectioned front view of the apparatus of Figure 6 in an open configuration.
With reference to Figure 1, a roller 1 is shown, comprising a base structure 2 that is externally coated by a tubular element 3 and which can, for example, be used to decorate ceramic tiles after an ornamental pattern has been cut into the external surface 4 of the tubular element 3.

The base structure 2 comprises an inner core 3 that is preferably made from a metallic material such as a net or bored sheet metal, or from plastic, whereby the base structure 2 is given sufficient rigidity and at the same time the weight of the base structure 2 is minimised to facilitate handling operations and reduce the inertia that is created during the rotation of the roller 1 on the decorating machine. To the side ends of the inner core 5 two flanges 6 are connected, said flanges 6 being suitable for allowing the roller 1 to be mounted on the decorating machine.

The base structure 2 further comprises, outside the inner core 5, an intermediate layer 7, made from an easily flexible and deformable material such as silicone in a sponge form, that has the task of giving the roller 1 such a flexibility as to enable the roller 1 to press on the tiles in order to transfer onto them an ornamental pattern, without breaking or damaging said tiles. Between the intermediate layer 7 and the inner core 3 a first layer of glue 8 is placed, said first layer of glue 8 being suitable for sticking the intermediate layer 7 to the inner core 5. A second layer of glue 9 placed between the intermediate layer 7 and the tubular element 3 prevents any sliding of the latter in relation to the structure underneath, which sliding must be under all circumstances avoided in order not to impair the accuracy of the decorating machine.

The base structure 2 can be set up in the manner described below. We start with an initially flat rectangular metallic net that is given a cylindrical form, for example by calendering, and it is welded along the joining line parallel to the cylinder axis to obtain the inner core 5, at the side ends of which the two flanges 6, that have been previously prepared, are welded. At this point the intermediate layer 7 is constructed starting with the silicone sponge, which has also initially a flat rectangular shape and is wrapped around the inner core 5, the first layer of glue 8 being placed between. The glue is obviously placed also along the joining line of the silicone sponge.

The base structure 2 that is thus obtained is subjected to grinding of the intermediate layer 7 to obtain perfect roundness that is vital for the purposes of accuracy of the decorating machine.

The intermediate sponge layer 7 is ground by an abrasive disc that is rotated rapidly around an axis that is perpendicular to the disc plane. The abrasive disk is also provided with a translation movement in an advancing direction. The abrasive disc comprises, for example, a metal circular element that is coated with glass paper arranged on a plurality of sectors of the circular element. The base structure 2, which has already been covered with the intermediate layer 7, is rotated around its own longitudinal axis Z and interacts peripherally with the abrasive disc at a circular surface of said disc.

As Figure 2 shows, the tubular element 3 is then fitted onto the base structure 2; this operation is possible because of the deformable properties of the tubular element 3, which is usually made of elastic material that can easily be deformed such as silicone, or polyurethane, or rubber in general.

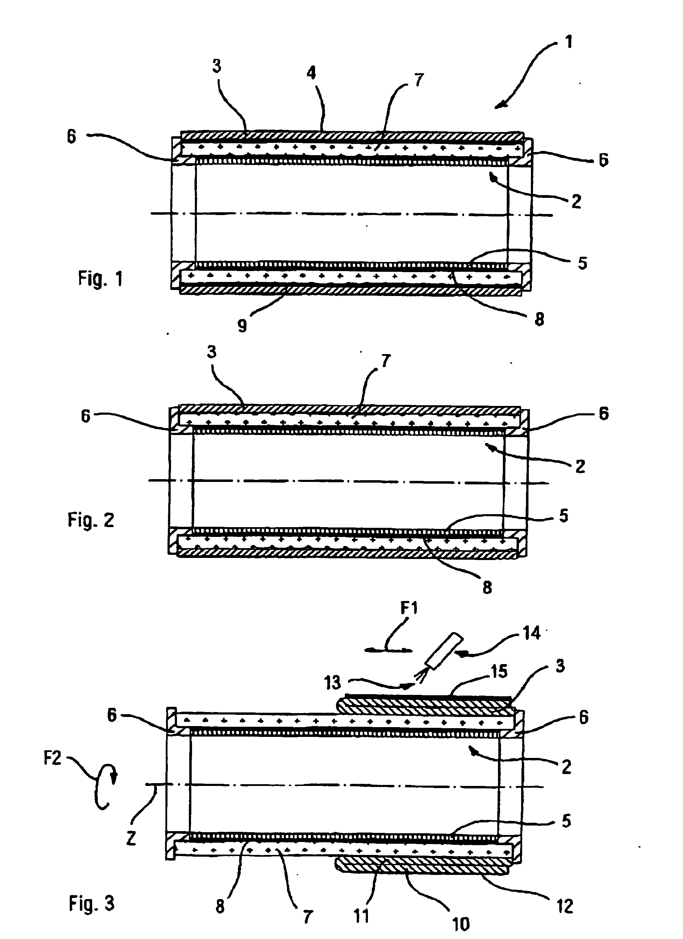

Afterwards, as shown in Figure 3, a first portion 10 of the tubular element 3 is turned inside out on a second portion 11 of said tubular element 3, to make a first initially internal region 12 of the tubular element 3 accessible- An adhesive substance 13 is applied on the first initially internal region 12 by means of spraying means 14: The spraying means 14 can be moved in the direction indicated by the arrow F1, to form a first part 15 of the second layer of glue 9. During this operation the base structure can be rotated around its longitudinal axis Z by motor means that have not been shown, as indicated by the arrow F2, to point to the spraying means 14 the first internal region 12 of the tubular element 3 along the entire extent of its circumference, which will thus be uniformly wet by the adhesive substance 13.

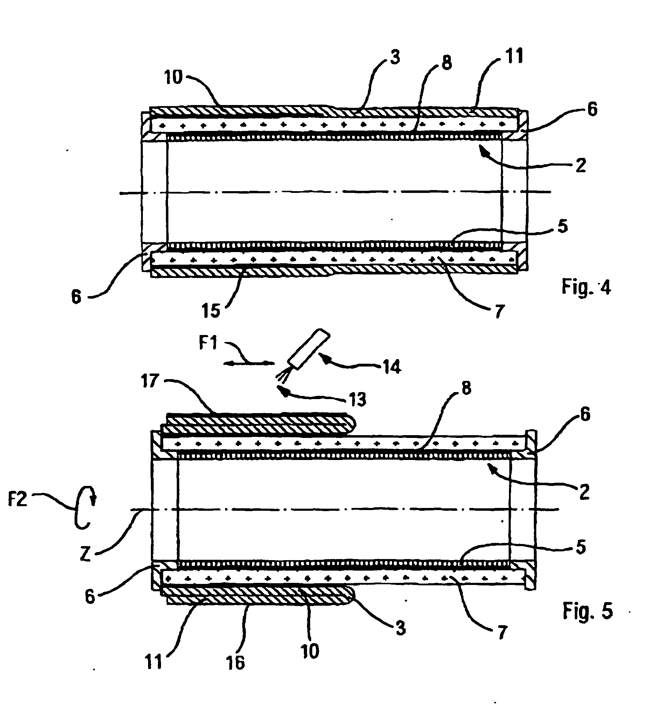

As Figure 4 shows, it is now possible to reposition the first portion 10 of the tubular element 3, together with the first part 15 of the second layer of glue 9, in contact with the base structure 2.

Subsequently, as shown in Figure 5, the second portion 11 of the tubular element 3 is turned inside out on the first portion 10 of the tubular element, thereby making accessible a second internal region 16 of said tubular element 3. Spraying means 14 apply an adhesive substance 13 on such internal region 16, in the manner previously described, to form a second part 17 of the second layer of glue 9. Repositioning the second portion 11, together with the second part 17 of the second layer of glue 9, the roller 1 is obtained, which is rotated around the axis Z by said motor means for another short period of time, so as to enable the adhesive substance 13 to properly penetrate the intermediate layer 7 and to stick to it firmly.

Owing to the spraying means 14, the adhesive substance 13 can be administered precisely, i.e. in a sufficient quantity to ensure high resistance to shear stress and at the same time low resistance to peeling of the second glue layer 9. High resistance to shear stress is fundamental to ensure that during rotating operation of the decorating machine no slipping between the base structure 2 and the tubular element 3 occurs whilst the low resistance to peeling enables the tubular element 3 to be easily removed from said base structure 2, for example if the tubular element 3, due to wear and tear, is no longer able to effectively perform its task on the decorating machine.

The rollers 1 described above can therefore easily be regenerated if they are worn or damaged by removing the worn tubular element 3 and fitting a new tubular element 3 on the base structure as previously explained. Thus, the old base structure 2 can be recycled, which saves significant amounts of time and money.

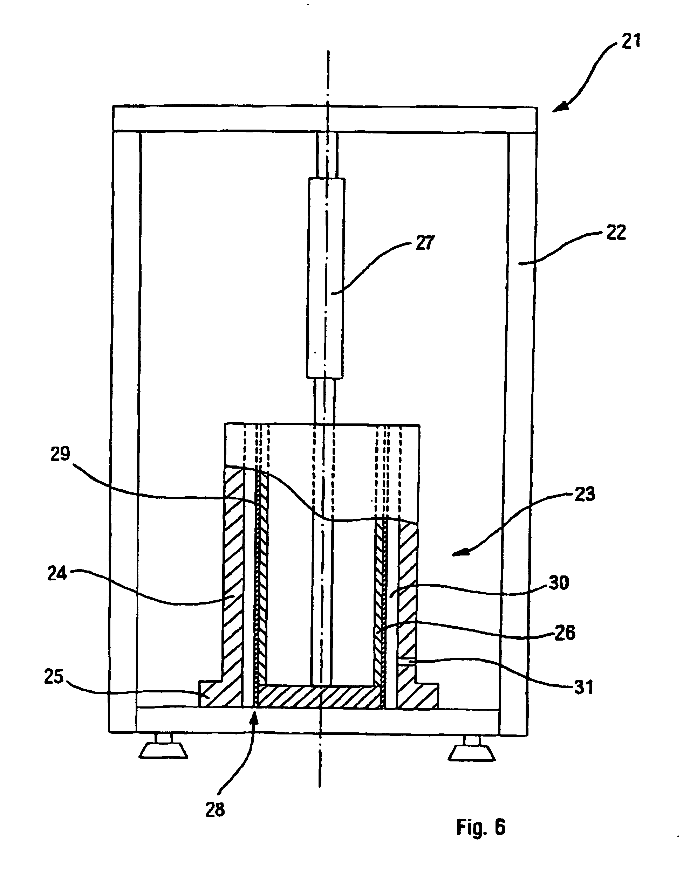

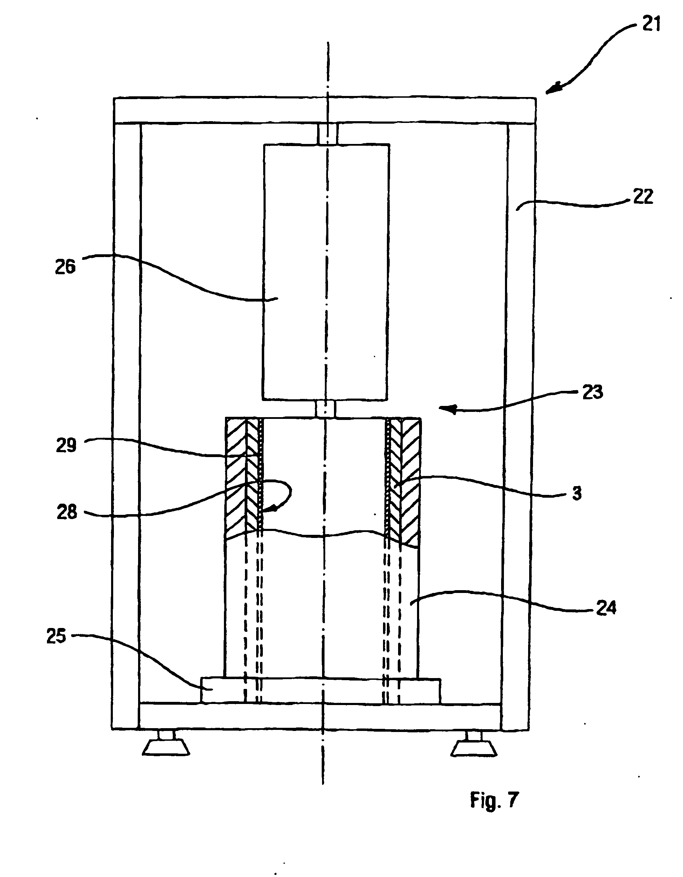

The tubular element. 3 is obtained by proceeding as described below with reference to Figures 6 and 7, which figures show an apparatus 21 for producing a tubular element 3 comprising a framework 22 that supports mould means 23. The mould means 23 comprise a matrix 24, that is fixed to the framework 22. The matrix 24 is shaped according to a hollow cylindrical geometry and is provided with a support flange 25. The mould means 23 further comprise a punch 26, which is also shaped according to a hollow cylindrical geometry. The punch 26 may move from a work position, shown in Figure 6, wherein it is arranged inside the matrix 24, and an unloading position, shown in Figure 7, wherein it is disengaged from said matrix 24 and arranged above it. In its translation movement the punch 26 is driven by a linear actuator 27 connected to the framework 22 of the apparatus 21.

Outside the punch 26 separator means 28 are provided, said separator means 28 being suitable for enabling the detachment of the punch 26 from the tubular element 3; the separator means 28 preferably comprise a flexible plastic bag 29, which plastic bag is wrapped tautly and without wrinkles around the punch 26.

To produce a tubular element 3, the punch 26 is moved down by the linear actuator 27 until said punch 26 is completely introduced inside the matrix 24. as shown in Figure 6. In this way a cavity 30 is identified, said cavity 30 being arranged between the matrix 24 and the punch 26. Inside the cavity 30 flowable means can be injected, suitable for forming the tubular element, at the end of a solidification process. The flowable means may be in fluid or granular form and preferably comprise a silicone fluid obtained by mixing a base agent with a catalyst agent; the resulting fluid is injected; by a feed circuit that is not shown, inside the cavity 30 through an inlet opening 31 in the bottom of the matrix 26, i.e. near the support flange 25.

The silicone fluid is supplied until the cavity 30 is completely filled. The cavity 30 is filled from bottom to top to ensure that no air bubbles are included in the fluid mass; subsequently the base agent is catalysed by the catalyst agent and progressively hardens until a preset consistency is reached. This solidification operation takes place in conditions of ambient temperature and of atmospheric pressure and humidity and makes the process particularly simple and manageable even for an unskilled operator.

When the silicone fluid has acquired the right consistency and the tubular element 3 can be considered to have been formed, the linear actuator 27 lifts the punch 26 above the matrix 24; during this lifting the flexible plastic bag 29 is detached from the punch 26 and remains attached to the internal surface of the tubular element 3. At this point an operator manually separates the tubular element 3 from the matrix 24 and from the bag 29, exploiting the flexibility of the tubular element 3 and the bag 29. The apparatus 1 is now ready to produce a new tubular element 3, after the punch 26 has been wrapped with a new bag 29. This last operation is extremely important, because if there were no bag 29, the tubular element 3 would be irreparably torn during extraction of the punch 26 from the matrix 24.

Owing to the perfect surface finish that distinguishes both the internal surface of the matrix 24 and the external surface of the punch 26, the tubular element 3 thereby obtained requires no grinding and can be fitted on the base structure 2 as previously described.

## Claims

1. Method for producing roller means (1), comprising providing a base structure (2) including a substantially rigid inner core (5) supporting at least one intermediate sponge layer (7) and coating said base structure (2) with tubular means (3), said coating comprising fitting said tubular means (3) on said base structure (2), and further comprising applying, between said tubular means (3) and said base structure (2), gluing means (13) suitable for fixing said tubular means (3) to said base structure (2), **characterised in that**, during said applying, at least a portion of said tubular means (3) is fitted on said base structure (2) and **in that** to the side ends of said inner core (5) two flanges (6) are connected.

2. Method according to claim 1, wherein said applying gluing means (13) occurs through spraying means (14) suitable for distributing said gluing means (13) uniformly and in proper quantities.

3. Method according to claim 2, wherein said gluing means (14) is applied to said tubular means (3).

4. Method according to any one of claims 1 to 3, and further comprising turning inside out at least one first portion (10) of said tubular means (3) on at least one second portion (11) of said tubular means (3), so as to make a first internal region (12) of said tubular means (3) accessible, applying on said first internal region (12) said gluing means (13), and repositioning said at least one first portion (10) in contact with said base structure (2).

5. Method according to claim 4, and further comprising turning inside out said at least one second portion (11) on said at least one first portion (10), so as to make a second internal region (16) of said tubular means (3) accessible, applying on said second internal region (16) said gluing means (13), and repositioning said at least one second portion (11) in contact with said base structure (2).

6. Method according to any one of claims 1 to 5, and further comprising rotating said base structure (2) to enable said gluing means (13) to be uniformly distributed between said base structure (2) and said tubular means (3).

7. Method according to any one of claims 1 to 6, wherein said providing a base structure (2) comprises shaping flat lamina means according to a cylindrical geometry, to obtain said substantially rigid inner core (5).

8. Method according to claim 7, and further comprising joining said flat lamina means along at least one joining line of said flat lamina means.

9. Method according to claim 7, or 8, wherein said providing further comprises arranging on said substantially rigid inner core (5) said at least one intermediate sponge layer (7), suitable for giving a preset flexibility to said base structure (2).

10. Method according to claim 9, wherein said arranging said at least one intermediate sponge layer (7) comprises bending further flat lamina means according to a cylindrical conformation.

11. Method according to claim 10, and further comprising fixing said further flat lamina means to said substantially rigid inner core (5).

12. Method according to claim 10, or 11, and further comprising connecting said further flat lamina means along at least one connecting line of said further flat lamina means.

13. Method according to any one of claims 1 to 12, and further comprising externally grinding said base structure (2) to eliminate possible circularity defects.

14. Method according to any one of claims 1 to 13, wherein said providing comprises removing worn or damaged tubular means (3) from pre-existing roller means (1).

## Patentansprüche

1. Verfahren zum Herstellen von Rollenmitteln (1) mit den folgenden Schritten: Vorsehen einer Basisstruktur (2) einschließlich eines im Wesentlichen steifen inneren Kerns (5), der zumindest eine Zwischenschwammschicht (7) trägt, und Beschichten der Basisstruktur (2) mit Rohrmitteln (3), wobei das Beschichten ein Anpassen der Rohrmittel (3) an die Basisstruktur (2) umfasst, und des Weiteren Auftragen, zwischen den Rohrmitteln (3) und der Basisstruktur (2), von Klebemitteln (13), die zum Befestigen der Rohrmittel (3) an der Basisstruktur (2) geeignet sind, **dadurch gekennzeichnet, dass** während dem Auftragen zumindest ein Teil der Rohrmittel (3) an die Basisstruktur (2) angepasst wird, und dass zwei Flansche (6) mit den Seitenenden des inneren Kerns (5) verbunden werden.

2. Verfahren nach Anspruch 1, wobei das Auftragen der Klebemittel (13) durch Sprühmittel (14) erfolgt, die zum Verteilen des Klebemittels (13) auf eine gleichmäßige Weise und in geeigneten Mengen geeignet sind.

3. Verfahren nach Anspruch 2, wobei die Klebemittel (14) auf die Rohrmittel (3) aufgetragen werden.

4. Verfahren nach einem der Ansprüche 1 bis 3, das des Weiteren ein Nach-Außen-Stülpen von zumindest einem ersten Teil (10) der Rohrmittel (3) auf einen zumindest zweiten Teil (11) der Rohrmittel (3) aufweist, um so einen ersten inneren Bereich (12) der Rohrmittel (3) zugänglich zu machen, wobei die Klebemittel (13) auf den ersten inneren Bereich (12) aufgetragen werden und wobei zumindest der erste Teil (10) erneut in Berührung mit der Basisstruktur (2) angeordnet wird.

5. Verfahren nach Anspruch 4, das des Weiteren ein Nach-Außen-Stülpen des zumindest zweiten Teils (11) auf den zumindest ersten Teil (10) aufweist, um einen zweiten inneren Bereich (16) der Rohrmittel (3) zugänglich zu machen, wobei die Klebemittel (13) auf den zweiten inneren Bereich (16) aufgetragen werden und wobei der zumindest zweite Teil (11) erneut in Berührung mit der Basisstruktur (2) angeordnet wird.

6. Verfahren nach einem der Ansprüche 1 bis 5, das des Weiteren ein Drehen der Basisstruktur (2) aufweist, damit sich die Klebemittel (13) gleichmäßig zwischen der Basisstruktur (2) und den Rohrmitteln (3) verteilen.

7. Verfahren nach einem der Ansprüche 1 bis 6, wobei das Vorsehen einer Basisstruktur (2) ein Formen von flachen, dünnen Schichtmitteln entsprechend einer zylindrischen Geometrie aufweist, um den im Wesentlichen steifen inneren Kern (5) zu erhalten.

8. Verfahren nach Anspruch 7, das des Weiteren ein Verbinden der flachen, dünnen Schichtmittel entlang zumindest einer Verbindungslinie der flachen, dünnen Schichtmittel aufweist.

9. Verfahren nach Anspruch 7 oder 8, wobei das Vorsehen des Weiteren ein Anordnen der zumindest einen Zwischenschwammschicht (7), die zum Bereitstellen einer vorgegebenen Flexibilität für die Basisstruktur (2) geeignet ist, auf den im Wesentlichen steifen inneren Kern (5) aufweist.

10. Verfahren nach Anspruch 9, wobei das Anordnen der zumindest einen Zwischenschwammschicht (7) ein Biegen von weiteren flachen, dünnen Schichtmitteln entsprechend einer zylindrischen Gestalt aufweist.

11. Verfahren nach Anspruch 10, das des Weiteren ein Befestigen der weiteren flachen, dünnen Schichtmittel an dem im Wesentlichen steifen Kern (5) aufweist.

12. Verfahren nach Anspruch 10 oder 11, das des Weiteren ein Verbinden der weiteren flachen, dünnen Schichtmittel entlang zumindest einer Verbindungslinie der weiteren flachen, dünnen Schichtmittel aufweist.

13. Verfahren nach einem der Ansprüche 1 bis 12, das des Weiteren ein äußeres Schleifen der Basisstruktur (2) aufweist, um mögliche Unrundheitsfehler zu beseitigen.

14. Verfahren nach einem der Ansprüche 1 bis 13, wobei das Vorsehen ein Entfernen von verschlissenen oder beschädigten Rohrmitteln (3) aus bereits bestehenden Rollenmitteln (1) aufweist.

## Revendications

1. Procédé de fabrication de moyens de rouleau (1), comprenant la fourniture d'une structure de base (2) comportant un mandrin interne sensiblement rigide (5) supportant au moins une couche d'éponge intermédiaire (7) et le revêtement de ladite structure de base (2) avec des moyens tubulaires (3), ledit revêtement comprenant la mise en place desdits moyens tubulaires (3) sur ladite structure de base (2) et comprenant de plus l'application, entre lesdits moyens tubulaires (3) et ladite structure de base (2), de moyens de collage (13) aptes à fixer lesdits moyens tubulaires (3) sur ladite structure de base (2), ***caractérisé en ce que****,* pendant ladite application, au moins une portion desdits moyens tubulaires (3) est mise en place sur ladite structure de base (2), et ***en ce que*** deux brides (6) sont couplées aux extrémités latérales dudit mandrin interne (5).

2. Procédé selon la revendication 1, dans lequel ladite application des moyens de collage (13) se fait par des moyens de pulvérisation (14) aptes à distribuer uniformément et selon des quantités appropriées lesdits moyens de collage (13).

3. Procédé selon la revendication 2, dans lequel lesdits moyens de collage (14) sont appliqués sur lesdits moyens tubulaires (3).

4. Procédé selon l'une quelconque des revendications 1 à 3, et comprenant de plus le retournement de l'intérieur vers l'extérieur d'au moins une première portion (10) desdits moyens tubulaires (3) sur au moins une deuxième portion (11) desdits moyens tubulaires (3), afin de rendre accessible une première zone interne (12) desdits moyens tubulaires (3), l'application sur ladite première zone interne (12) desdits moyens de collage (13), et le repositionnement de ladite au moins une première portion (10), en contact avec ladite structure de base (2).

5. Procédé selon la revendication 4, et comprenant de plus le retournement de l'intérieur vers l'extérieur de ladite au moins une deuxième portion (11) sur ladite au moins une première portion (10), afin de rendre accessible une deuxième zone interne (16) desdits moyens tubulaires (3), l'application sur ladite deuxième zone interne (16) desdits moyens de collage (13), et le repositionnement de ladite au moins une deuxième portion (11), en contact avec ladite structure de base (2).

6. Procédé selon l'une quelconque des revendications 1 à 5, et comprenant de plus la rotation de ladite structure de base (2) pour permettre auxdits moyens de collage (13) d'être uniformément distribués entre ladite structure de base (2) et lesdits moyens tubulaires (3).

7. Procédé selon l'une quelconque des revendications 1 à 6, dans lequel ladite fourniture d'une structure de base (2) comprend le façonnage de moyens de plaque mince plate selon une géométrie cylindrique afin d'obtenir ledit mandrin intérieur sensiblement rigide (5).

8. Procédé selon la revendication 7, et comprenant de plus la réunion desdits moyens de plaque mince plate le long d'au moins une ligne de jointure desdits moyens de plaque mince plate.

9. Procédé selon la revendication 7 ou 8, dans lequel ladite fourniture comprend en plus la mise en place sur ledit mandrin intérieur sensiblement rigide (5) de ladite au moins une couche d'éponge intermédiaire (7) apte à offrir une flexibilité préétablie à ladite structure de base (2).

10. Procédé selon la revendication 9, dans lequel ladite mise en place de ladite au moins une couche d'éponge intermédiaire (7) comprend le cintrage de moyens de plaque mince plate supplémentaires selon une conformation cylindrique.

11. Procédé selon la revendication 10, et comprenant de plus la fixation desdits moyens de plaque mince plate supplémentaires sur ledit mandrin intérieur sensiblement rigide (5).

12. Procédé selon la revendication 10 ou 11, et comprenant de plus le raccordement desdits moyens de plaque mince plate supplémentaires le long d'au moins une ligne de raccordement desdits moyens de plaque mince supplémentaires.

13. Procédé selon l'une quelconque des revendications 1 à 12, et comprenant de plus le meulage extérieur de ladite structure de base (2) pour en éliminer de possibles défauts de circularité.

14. Procédé selon l'une quelconque des revendications 1 à 13, dans lequel ladite fourniture comprend le retrait de moyens tubulaires usés ou endommagés de moyens de rouleaux pré-existants (1).
